# EUROPEAN PATENT APPLICATION

(11) **EP 4 618 203 A1**
(43) Date of publication of application: **17.09.2025**
(21) Application number: 23889061.0
(22) Date of filing: 03.11.2023
(51) Int. Cl.: H01M 8/1004, H01M 4/86, H01M 4/88, H01M 8/1018, H01M 8/10

(54) **MEMBRANE-ELECTRODE ASSEMBLY FOR FUEL CELL, AND MANUFACTURING METHOD THEREFOR**

(30) Priority: 08.11.2022 KR 20220147566
(71) Applicant: Kolon Industries, Inc., Seoul 07793 (KR)
(72) Inventor: KONG, Nak Won, Seoul 07793 (KR); KIM, Jun Young, Seoul 07793 (KR); KIM, Jung Ho, Seoul 07793 (KR); SONG, Kah Young, Seoul 07793 (KR); LEE, Ju Sung, Seoul 07793 (KR)
(74) Representative: Vossius & Partner Patentanwälte Rechtsanwälte mbB
(86) International application number: PCT/KR2023/017538
(87) International publication number: WO 2024/101800

(57) **Abstract**

The present disclosure relates to a membrane-electrode assembly for a fuel cell and a fabrication method therefor. More specifically, the membrane-electrode assembly for a fuel cell according to the present disclosure comprises: an electrode including a high-porosity catalyst layer and a low-porosity catalyst layer; and an adhesive layer between the electrode and a polymer electrolyte membrane, and thus may have improved durability and performance.

## Description

### Technical Field

The present disclosure relates to a membrane-electrode assembly for a fuel cell and a method for fabricating the same.

### Background Art

A fuel cell is a power generation system that converts the chemical reaction energy of hydrogen and oxygen contained in hydrocarbon-based materials, such as methanol, ethanol, and natural gas, directly into electric energy. A representative example of such a fuel cell may be a polymer electrolyte membrane fuel cell (PEMFC). The polymer electrolyte membrane fuel cell is attracting attention as a portable, vehicle, and home power supply device due to its advantages such as low operating temperature of less than 100°C, fast starting and response characteristics, and excellent durability.

A membrane-electrode assembly (MEA) that substantially generates electricity in the above-described fuel cell system has a structure in which an anode (also referred to as a fuel electrode or an oxidation electrode) and a cathode (also referred to as an air electrode or a reduction electrode) are disposed with an electrolyte membrane interposed therebetween. The electrolyte membrane is an electrically insulating but ionically conductive membrane, and protons generated at the anode pass through the membrane to the cathode and combine with oxygen to generate water.

Among the fabrication techniques for membrane-electrode assemblies, the decal method has the advantage of excellent mass productivity because it is easy to control the thickness and area of the catalyst layer. In addition, the decal method corresponds to the catalyst-coated membrane (CCM) method of forming an electrode layer on a membrane, and has the advantage of being able to reduce the contact resistance between the membrane and the catalyst layer compared to the catalyst-coated GDL (CCG) method of coating a gas diffusion layer with a catalyst layer.

However, when a membrane-electrode assembly is fabricated by the decal method according to conventional technology, the adhesion face between the electrolyte membrane and the interface of the electrode is non-uniform and the adhesion strength therebetween is weak, resulting in high resistance, low output, and low durability. In addition, when bonding is performed by high-pressure pressing, the pores in the electrode are insufficient, which adversely affects oxygen diffusion and water discharge in the cathode.

### DISCLOSURE

### Technical Problem

An object of the present disclosure is to provide a membrane-electrode assembly for a fuel cell having excellent adhesion strength between the electrode and the electrolyte membrane while improving gas diffusion and water discharge capabilities of the electrode, a fuel cell including the same, and a method for fabricating the same.

### Technical Solution

According to one aspect of the present disclosure, there is a membrane-electrode assembly for a fuel cell including: a polymer electrolyte membrane; a first adhesive layer on the polymer electrolyte membrane; a second adhesive layer on the first adhesive layer; a first catalyst layer with low porosity on the second adhesive layer; and a second catalyst layer with high porosity on the first catalyst layer with low porosity, wherein the first adhesive layer contains a plasticizer and a crosslinking agent, and the second adhesive layer contains an ion-conducting polymer.

According to one embodiment, the plasticizer may be at least one selected from the group consisting of (poly)alkylene glycol, dihydroxybenzene, (poly)alkylene glycol dialkyl ether, benzoquinone, dialkylene phthalate, and copolymers thereof.

According to one embodiment, the plasticizer may be at least one selected from polyethylene glycol, polypropylene glycol, ethylene glycol, propylene glycol, tetraethylene glycol, dihydroxybenzene, polyethylene glycol dimethyl ether, polyethylene glycol diethyl ether, polyethylene glycol dipropyl ether, polyethylene glycol dibutyl ether, polypropylene glycol dimethyl ether, polypropylene glycol diethyl ether, benzoquinone, dimethyl phthalate, diethyl phthalate, dibutyl phthalate, dioctyl phthalate, and copolymers thereof.

According to one embodiment, the crosslinking agent may have a functional group capable of forming a hydrogen bond with the ion-conducting polymer.

According to one embodiment, the crosslinking agent may have at least one functional group selected from the group consisting of a carbonyl group (-CO-), a hydroxyl group (-OH), a carboxyl group (-COOH), a nitro group (-NO₂), and an amine group (-NR¹R²), wherein R¹ and R² are each independently H, a substituted or unsubstituted alkyl group having 1 to 6 carbon atoms, or a substituted or unsubstituted aryl group having 6 to 12 carbon atoms, or are bonded to each other to form a heterocycle having 2 to 5 carbon atoms.

According to one embodiment, the crosslinking agent may be a substituted or unsubstituted benzoquinone, a substituted or unsubstituted naphthoquinone, a substituted or unsubstituted dihydroxybenzene, a substituted or unsubstituted benzenedicarboxylic acid, a substituted or unsubstituted aminophenol, a substituted or unsubstituted phenylenediamine, a substituted or unsubstituted bipyridine diamine, a substituted or unsubstituted di(aminophenyl)amine, a substituted or unsubstituted bipyrrole, or a mixture of two or more thereof.

According to one embodiment, the weight ratio between the plasticizer and the crosslinking agent may be 5:1 to 1:1.

According to one embodiment, the ion-conducting polymer may be a proton-conducting conductor having at least one proton exchange group selected from the group consisting of a sulfonic acid group, a carboxyl group, a boronic acid group, a phosphoric acid group, an imide group, a sulfonimide group, a sulfonamide group, a sulfonic acid fluoride group, and combinations thereof.

According to one embodiment, the ion-conducting polymer may be a fluorine-based proton-conducting conductor having a sulfonic acid group and/or a carboxyl group, a hydrocarbon-based proton-conducting conductor having a sulfonic acid group and/or a carboxyl group, or a mixture thereof.

According to one embodiment, the first catalyst layer and the second catalyst layer may each independently contain a first ion-conducting polymer and a second ion-conducting polymer, and the ion-conducting polymer of the second adhesive layer may be the same as at least one of the first ion-conducting polymer and the second ion-conducting polymer.

According to one embodiment, the thicknesses of the first adhesive layer and the second adhesive layer may each independently be 0.01 to 5 µm.

According to one embodiment, the second catalyst layer with high porosity may have a three-dimensional web structure.

According to one embodiment, the second catalyst layer with high porosity may contain at least one fiber-forming polymer selected from the group consisting of polyether urethane, polyvinyl acetate (PVAc), a polyvinyl acetate copolymer, polyvinyl alcohol (PVA), polyfurfuryl alcohol (PPFA), polyurethane, a polyurethane copolymer such as polyether urethane, cellulose acetate, cellulose acetate butyrate, cellulose acetate propionate, polymethyl methacrylate (PMMA), polymethyl acrylate (PMA), a polyacrylic copolymer, polystyrene, a polystyrene copolymer, polyethylene, polyethylene glycol, polyethylene oxide (PEO), polypropylene oxide (PPO), a polyethylene oxide copolymer, a polypropylene oxide copolymer, polycarbonate (PC), polyvinyl acetal, polyvinyl chloride (PVC), polycaprolactone, polyvinylpyrrolidone (PVP), polyvinyl fluoride, a polyvinylidene fluoride copolymer, and polyamide.

According to one embodiment, the first catalyst layer with low porosity may have a porosity of 1 to 50% and a pore size of 10 to 500 nm, and the second catalyst layer with high porosity may have a porosity of 50 to 90% and a pore size of 500 to 5,000 nm.

According to one embodiment, the first catalyst layer with low porosity may have a thickness of 1 µm to 10 µm, and the second catalyst layer with high porosity may have a thickness of 1 µm to 20 µm.

According to another aspect of the present disclosure, there is provided a method for fabricating a membrane-electrode assembly for a fuel cell, including steps of: (a) forming a first catalyst layer with low porosity on a substrate; (b) forming a second adhesive layer containing an ion-conducting polymer on the first catalyst layer with low porosity; (c) forming a first adhesive layer containing a plasticizer and a crosslinking agent on the second adhesive layer; (d) performing positioning such that the first adhesive layer faces one surface or both surfaces of a polymer electrolyte membrane, followed by bonding; (e) removing the substrate; and (f) forming a second catalyst layer with high porosity on the first catalyst layer with low porosity.

According to one embodiment, the second adhesive layer in step (b) may be formed by applying a solution containing the ion-conducting polymer, and the ion-conducting polymer in the solution may be contained in an amount of 0.5 to 60 wt% based on the total weight of the solution.

According to one embodiment, the first adhesive layer in step (c) may be formed by applying a solution containing the plasticizer and the crosslinking agent, and the total amount of the plasticizer and the crosslinking agent in the solution may be 0.5 to 60 wt% based on the total weight of the solution.

According to one embodiment, the second catalyst layer in step (f) may be formed by spinning a spinning solution prepared by mixing a catalyst, an ion-conducting polymer, a fiber-forming polymer, and a solvent.

According to still another aspect of the present disclosure, there is a fuel cell including the membrane-electrode assembly.

### Advantageous Effects

The membrane-electrode assembly of the present disclosure may be fabricated at lower temperature and lower pressure than those in conventional fabrication methods that are performed at high temperature and high pressure. Through such low-temperature transfer, there are advantages in that it is possible to prevent deterioration of the ionomer of the electrode part, and reduce deformation of the polymer electrolyte membrane and the release film, which is caused by temperature and pressure, thereby improving production quality.

In addition, since bonding is performed at a lower temperature and pressure than those in conventional technology, it is possible to overcome the problem that pores are excessively lost due to densification at high temperature and high pressure. In addition, since the electrode also has the catalyst layer with high porosity, the porosity of the entire membrane-electrode assembly is excellent. Accordingly, the membrane-electrode assembly of the present disclosure has low mass transfer resistance. In addition, by combining the catalyst layer with high porosity with the catalyst layer with low porosity, the charge transfer resistance may also be lowered compared to a catalyst layer composed only of a catalyst layer with high porosity. In addition, the durability and performance of the membrane-electrode assembly are improved because the adhesion strength between the electrode and the electrolyte membrane may be increased by the adhesive layer while maintaining the excellent gas diffusivity and moisture discharge capability of the electrode.

### Brief Description of Drawings

FIG. 1 is a cross-sectional view schematically showing a membrane-electrode assembly according to one embodiment of the present disclosure.
FIG. 2 is a schematic diagram illustrating the overall configuration of a fuel cell according to one embodiment of the present disclosure.
FIG. 3 shows membrane-electrode assemblies fabricated in Comparative Examples and Examples of the present disclosure. (a), (b), (c), (d) of FIG. 3 correspond to Comparative Examples 1 to 4, respectively, and (e) of FIG. 3 corresponds to Examples 1 and 2.
FIG. 4 shows the results of a tensile test according to Experimental Example 1.

### Best Mode

Hereinafter, embodiments of the present disclosure will be described in detail with reference to the accompanying drawings so that those skilled in the art can easily carry out the present disclosure. However, the present disclosure may be embodied in various different forms and is not limited to the embodiments described herein.

In order to clearly express various layers and regions in the drawings, the thicknesses are exaggerated. Throughout the specification, like components are denoted by like reference numerals. When a portion such as a layer, film, region, plate or the like is referred to as being "over" or "on" another portion, it not only refers to a case where the portion is "directly on" the other portion but also a case where a third portion exists therebetween. Conversely, when a portion is referred to as being "directly on" another portion, it means that there is no other portion therebetween.

As used herein, the term "includes" or "contains" is used to list materials, compositions, devices, and methods useful in the present disclosure, but is not limited to the listed examples.

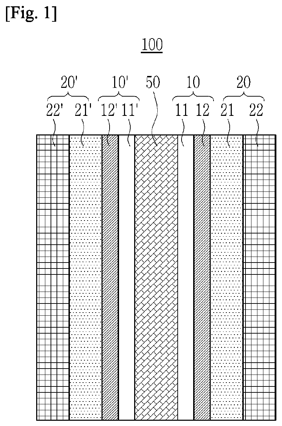

Hereinafter, a membrane-electrode assembly for a fuel cell according to one aspect will be described with reference to FIG. 1.

According to one aspect of the present disclosure, there is provided a membrane-electrode assembly 100 for a fuel cell, including: a polymer electrolyte membrane 50; a first adhesive layer 11, 11' on the polymer electrolyte membrane 50; a second adhesive layer 12, 12' on the first adhesive layer 11, 11'; a first catalyst layer with low porosity 21, 21' on the second adhesive layer 12, 12'; and a second catalyst layer with high porosity 22, 22' on the first catalyst layer 21, 21' with low porosity, wherein the first adhesive layer 11, 11' contains a plasticizer and a crosslinking agent, and the second adhesive layer 12, 12' contains an ion-conducting polymer.

The first adhesive layer 11, 11' is a layer that is in contact with the polymer electrolyte membrane 50 and contains a plasticizer and a crosslinking agent.

The plasticizer may be a plasticizer that is added during the fabrication of a conventional solid electrolyte membrane to control the ion transfer characteristics and processability of the solid electrolyte. As the plasticizer, a compound modified to contain at least one functional group capable of crosslinking with the ion-conducting polymer in the second adhesive layer or the polymer electrolyte may be used.

The plasticizer may be at least one selected from an aliphatic compound and an aromatic compound, which have a hydroxyl end, ether end, or ester end. Specifically, the plasticizer may include at least one selected from the group consisting of (poly)alkylene glycol, dihydroxybenzene, (poly)alkylene glycol dialkyl ether, benzoquinone, dialkylene phthalate, and copolymers thereof, wherein the alkylene may be an alkylene having 1 to 10 carbon atoms. For example, the plasticizer may be at least one selected from polyethylene glycol, polypropylene glycol, ethylene glycol, propylene glycol, tetraethylene glycol, dihydroxybenzene, polyethylene glycol dimethyl ether, polyethylene glycol diethyl ether, polyethylene glycol dipropyl ether, polyethylene glycol dibutyl ether, polypropylene glycol dimethyl ether, polypropylene glycol diethyl ether, benzoquinone, dimethyl phthalate, diethyl phthalate, dibutyl phthalate, dioctyl phthalate, and copolymers thereof.

The plasticizer may have a weight-average molecular weight of 10 to 10,000 g/mol or less, for example, 100 to 9,000 g/mol. If the weight-average molecular weight of the plasticizer is 10,000 g/mol or more, hydrogen ion transfer resistance may increase, resulting in deterioration in the performance of the fuel cell.

The crosslinking agent may have a functional group capable of forming a hydrogen bond with the ion-conducting polymer. If the amount of the plasticizer is large, the physical properties may decrease at low temperatures or it may be difficult to maintain a gel form. This problem may be overcome by adding a crosslinking agent. Therefore, it may be preferable to further contain a crosslinking agent that can stabilize the first adhesive layer 11, 11' containing the plasticizer at room temperature and form a hydrogen bond by reacting with, for example, a carboxyl group or a sulfonic acid group of the ion-conducting polymer.

For example, the crosslinking agent may have at least one functional group selected from the group consisting of a carbonyl group (-CO-), a hydroxyl group (-OH), a carboxyl group (-COOH), a nitro group (-NO₂), and an amine group (-NR¹R²), wherein R¹ and R² are each independently H, a substituted or unsubstituted alkyl group having 1 to 6 carbon atoms, or a substituted or unsubstituted aryl group having 6 to 12 carbon atoms, or are bonded to each other to form a heterocycle having 2 to 5 carbon atoms.

The crosslinking agent may be a cyclic compound. For example, the organic compound may be an aromatic compound or an alicyclic compound, and may be a heterocyclic compound or a homocyclic compound.

According to one embodiment of the present disclosure, the crosslinking agent may be a substituted or unsubstituted benzoquinone, a substituted or unsubstituted naphthoquinone, a substituted or unsubstituted dihydroxybenzene, a substituted or unsubstituted benzenedicarboxylic acid, a substituted or unsubstituted aminophenol, a substituted or unsubstituted phenylenediamine, a substituted or unsubstituted bipyridine diamine, a substituted or unsubstituted di(aminophenyl)amine, a substituted or unsubstituted bipyrrole, or a mixture of two or more thereof.

More specifically, the crosslinking agent may include at least one selected from the group consisting of the following compounds, without being limited thereto.

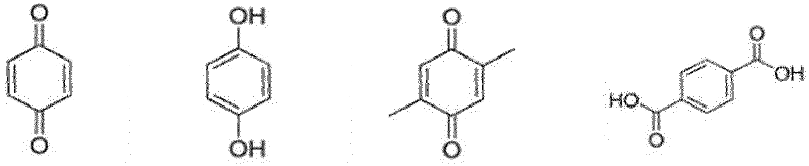

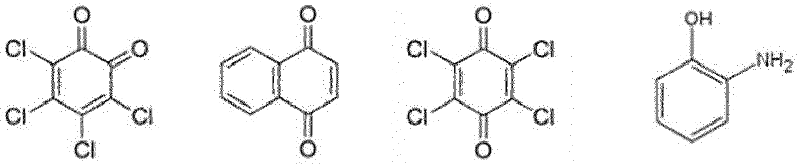

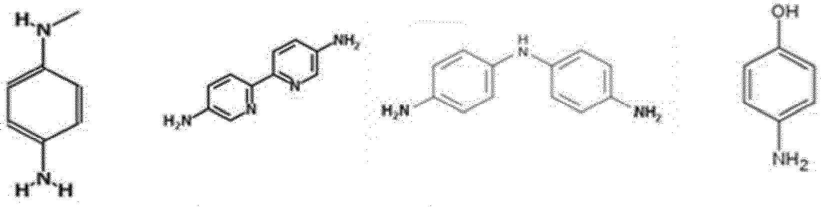

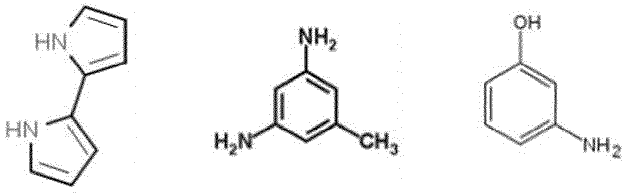

The thickness of the first adhesive layer 11, 11' may be 0.01 to 5 µm, specifically 0.1 to 3 µm, more specifically 0.1 to 1 µm. As the thickness is within the above range, it is possible to improve the adhesion strength between the polymer electrolyte membrane and the electrode while maintaining performance such as cell output, capacity, etc., and mechanical properties.

The second adhesive layer 12, 12' is a layer that is in contact with the catalyst layer of the electrode and contains an ion-conducting polymer. The ion-conducting polymer may be an ion-conducting polymer contained in the catalyst layer of the electrode, specifically, the first catalyst layer 21, 21' or the second catalyst layer 22, 22'.

The ion-conducting polymer may be a proton-conducting conductor having at least one proton exchange group selected from the group consisting of a sulfonic acid group, a carboxyl group, a boronic acid group, a phosphoric acid group, an imide group, a sulfonimide group, a sulfonamide group, a sulfonic acid fluoride group, and combinations thereof.

The ion-conducting polymer may be a fluorine-based proton-conducting conductor, a hydrocarbon-based proton-conducting conductor, or a mixture thereof. Specifically, the ion-conducting polymer according to one embodiment of the present disclosure may be a fluorine-based proton-conducting conductor having a sulfonic acid group and/or a carboxyl group, a hydrocarbon-based proton-conducting conductor having a sulfonic acid group and/or a carboxyl group, or a mixture thereof.

Examples of the fluorine-based proton-conducting conductor include Nafion, Aciplex, Flemion, polyvinylidene fluoride, hexafluoropropylene, trifluoroethylene, polytetrafluoroethylene, or copolymers thereof.

Examples of the hydrocarbon-based proton-conducting conductor include hydrocarbon polymers having the proton exchange group in the side chain, such as sulfonated polyimide (S-PI), sulfonated polyarylethersulfone (SPAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyethersulfone, sulfonated polyetherketone, sulfonated polyphenylene sulfone, sulfonated polyphenylene sulfide, sulfonated polyphenylene sulfide sulfone, sulfonated polyphenylene sulfide sulfonenitrile, sulfonated polyarylene ether, sulfonated polyarylene ether nitrile, sulfonated polyarylene ether ether nitrile, sulfonated polyarylene ether sulfone ketone, and the like.

In addition, the second adhesive layer 12, 12' may further contain an antioxidant, in addition to the ion-conducting polymer. The antioxidant is particles capable of removing peroxides or radicals and may include at least one selected from the group consisting of a transition metal, a noble metal, an ion thereof, a salt thereof, an oxide thereof, a nitride thereof, and a complex thereof. The transition metal may be at least one selected from the group consisting of cerium (Ce), manganese (Mn), tungsten (W), cobalt (Co), vanadium (V), nickel (Ni), chromium (Cr), zirconium (Zr), yttrium (Y), iridium (Ir), iron (Fe), titanium (Ti), molybdenum (Mo), lanthanum (La), and neodymium (Nd), without being limited thereto. The noble metal may be at least one selected from the group consisting of silver (Au), platinum (Pt), ruthenium (Ru), palladium (Pd), and rhodium (Rh), without being limited thereto. The salt of the transition metal or noble metal may be a carbonate, an acetate, a chloride, a fluoride, a sulfate, a phosphate, a nitrate, a tungstate, a hydroxide, an ammonium acetate, an ammonium sulfate, or an acetylacetonate salt. Specifically, examples of the salt of cerium include cerium carbonate, cerium acetate, cerium chloride, cerium acetate, cerium sulfate, cerium diammonium acetate, cerium tetraammonium sulfate, etc., and examples of the organometallic complex salt include cerium acetylacetonate, etc. The antioxidant may be contained in an amount of 1 to 20 parts by weight based on 100 parts by weight of the ion-conducting polymer. As the concentration of the antioxidant is within the above range, the functions of both the antioxidant and the ion-conducting polymer may be sufficiently exerted.

The thickness of the second adhesive layer 12, 12' may be 0.01 to 5 µm, specifically 0.1 to 3 µm, more specifically 0.1 to 2 µm. As the thickness is within the above range, it is possible to improve the adhesive strength between the polymer electrolyte membrane and the electrode while maintaining performance such as cell output, capacity, etc., and mechanical properties.

The second adhesive layer 12, 12' and the first adhesive layer 11, 11' may be formed at a weight ratio of 1:0.5 to 1:7, specifically 1:0.7 to 1:7, more specifically 1:1 to 1:7, based on the weight of the solid content in each layer. As the weight ratio between the second adhesive layer and the first adhesive layer is within the above range, it is possible to prevent the performance of the fuel cell from deteriorating due to an increase in hydrogen ion transfer resistance while sufficiently exerting the effect of improving the adhesive strength.

The first catalyst layer with low porosity 21, 21' and the second catalyst layer with high porosity 22, 22' each independently contain a first catalyst and a first ion-conducting polymer, and a second catalyst and a second ion-conducting polymer. The first catalyst and the second catalyst may be the same as or different from each other. In addition, the first ion-conducting polymer and the second ion-conducting polymer may be the same as or different from each other.

As the first catalyst and the second catalyst, any catalyst may be used, which participates in the reaction in the cell and may be used as a catalyst for a conventional fuel cell. Preferably, a platinum-based metal may be used.

The platinum-based metal may include one selected from the group consisting of platinum (Pt), palladium (Pd), ruthenium (Ru), iridium (Ir), osmium (Os), a platinum-M alloy (wherein M is at least one selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh)), a non-platinum alloy, and combinations thereof. More preferably, the platinum-based metal may be a combination of two or more metals selected from the platinum-based catalyst metal group, without being limited thereto and any platinum-based catalyst metal usable in the art to which the present disclosure pertains may be used without limitation.

Specifically, the platinum-M alloy may be one or a mixture of two or more selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, and combinations thereof.

In addition, the non-platinum alloy may be one or a mixture of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, and combinations thereof.

Such a catalyst may be used as a catalyst itself (black), or may be used by being supported on a carrier.

The carrier may be selected from a carbon-based carrier, a porous inorganic oxide such as zirconia, alumina, titania, silica, ceria, or the like, zeolite, etc. The carbon-based carrier may be selected from graphite, super P, carbon fiber, carbon sheet, carbon black, Ketjen black, Denka black, acetylene black, carbon nanotubes (CNT), carbon spheres, carbon ribbons, fullerene, activated carbon, carbon nanofibers, carbon nanowires, carbon nanoballs, carbon nanohorns, carbon nanocages, carbon nanorings, ordered nano-/meso-porous carbon, carbon aerogel, mesoporous carbon, graphene, stabilized carbon, activated carbon, and combinations of one or more thereof, without being limited thereto and any carrier usable in the art to which the present disclosure pertains may be used without limitation.

The catalyst may be positioned on the surface of the carrier, or may penetrate into the carrier while filling the internal pores of the carrier.

When the metal supported on the carrier is used as the catalyst, a commercially available one may be used, or one prepared by supporting the metal on the carrier may also be used. Since the process of supporting the metal on the carrier is widely known in the art, it may be easily understood by those skilled in the art even though the detailed description thereof is omitted in the present specification.

The first catalyst or the second catalyst may be contained in an amount of 20 to 80 wt% based on the total weight of each catalyst layer in which it is contained. If the first catalyst or the second catalyst is contained in an amount of less than 20 wt%, there may be a problem in that the catalytic activity is reduced, and if the first catalyst or the second catalyst is contained in an amount of more than 80 wt%, the active area may be reduced due to agglomeration of the catalyst particles, which may conversely reduce the catalytic activity. Here, the catalyst weight may be the total amount of the carrier and the catalyst supported on the carrier.

The first catalyst or the second catalyst may be loaded so that a metal such as a platinum-based metal is contained in each catalyst layer in an amount of 0.01 to 1 mg_{Pt}/cm². The first catalyst or the second catalyst may exhibit sufficient catalytic activity within the loading amount range.

The first ion-conducting polymer and the second ion-conducting polymer are for hydrogen ion transport and may also function as a binder. Ion-conducting polymers that may be used as the first ion-conducting polymer and the second ion-conducting polymer include the ion-conducting polymers described and exemplified with respect to the second adhesive layer, specifically proton-conducting conductors having at least one proton exchange group selected from the group consisting of a sulfonic acid group, a carboxyl group, a boronic acid group, a phosphoric acid group, an imide group, a sulfonimide group, a sulfonamide group, a sulfonic acid fluoride group, and combinations thereof, and the first ion-conducting polymer and the second ion-conducting polymer may be the same as or different from the ion-conducting polymer contained in the second adhesive layer.

The second catalyst layer 22, 22' may further contain a fiber-forming polymer, in addition to the second catalyst and the second ion-conducting polymer. The fiber-forming polymer is a polymer used to enable the second catalyst layer to have a frame with a highly porous three-dimensional web structure through a spinning process described below, and any material that may be formed into a fiber shape and does not affect the activity of the catalyst and the ion-conducting polymer may be used without particular limitation.

The fiber-forming polymer may be, for example, at least one selected from the group consisting of polyether urethane, polyvinyl acetate (PVAc), a polyvinyl acetate copolymer, polyvinyl alcohol (PVA), polyfurfuryl alcohol (PPFA), polyurethane, a polyurethane copolymer such as polyether urethane, cellulose acetate, cellulose acetate butyrate, cellulose acetate propionate, polymethyl methacrylate (PMMA), polymethyl acrylate (PMA), a polyacrylic copolymer, polystyrene, a polystyrene copolymer, polyethylene, polyethylene glycol, polyethylene oxide (PEO), polypropylene oxide (PPO), a polyethylene oxide copolymer, a polypropylene oxide copolymer, polycarbonate (PC), polyvinyl acetal, polyvinyl chloride (PVC), polycaprolactone, polyvinylpyrrolidone (PVP), polyvinyl fluoride, a polyvinylidene fluoride copolymer, and polyamide.

According to one embodiment, when the fiber-forming polymer is spun, a hollow fiber may be formed. In this case, there is an advantage in that, since a hollow is formed inside the fiber, pores may be formed without necessarily removing part or all of the polymer, and thus heat treatment may be performed at a low temperature. These hollow fibers may be formed by adjusting the nozzle used as the spinneret into various shapes. According to another embodiment of the invention, after the fiber-forming polymer forms a frame with a three-dimensional web structure, at least a portion of the fiber-forming polymer may be removed from the second catalyst layer by means such as heat, a chemical reaction, an organic solvent, etc., if necessary, and pores may be formed by such removal of the polymer. However, since the fiber-forming polymer also acts as a binder, it may be preferable not to remove the fiber-forming polymer if possible.

The first catalyst layer 21, 21' may have low porosity, specifically a porosity of 1 to 50%, more specifically 10 to 50%, even more specifically 20 to 45%, and a pore size of 10 to 500 nm, specifically 20 to 300 nm, more specifically 20 to 200 nm. If the porosity is less than 1% or the pore size is less than 10 nm, the movement and discharge of gas and water in the electrode may not be smooth, and if the porosity is more than 50% or the pore size is more than 500 nm, the time for which the reaction gas remains within the electrode is short, which may result in deterioration of the cell performance.

The first catalyst layer 21, 21' may have a thickness in the range of 1 µm to 10 µm. If the thickness is less than 1 µm, the reaction area may be small and the activity may be reduced, and if the thickness is more than 10 µm, the movement distance of ions and electrons may increase and the resistance may increase.

The second catalyst layer 22, 22' may have high porosity, specifically a porosity of 50 to 90%, more specifically 60 to 80%, and a pore size of 500 to 5,000 nm, more specifically 600 to 3,000 nm. If the porosity is less than 60% or the pore size is less than 500 nm, it may be difficult to sufficiently exhibit effects such as a reduction in material transfer resistance by the introduction of the catalyst layer with high porosity, and if the porosity is more than 90% or the pore size is more than 5,000 nm, the mechanical strength of the catalyst layer may be excessively poor.

The second catalyst layer 22, 22' may be configured such that the porosity on the surface of the second catalyst layer 22, 22' (e.g., the surface in contact with the gas diffusion layer) is greater than the porosity on the surface in contact with the first catalyst layer 21, 21'. For example, it may be configured such that 30% or less of the total pores of the second catalyst layer 22, 22' exist in an area corresponding to half of the thickness of the second catalyst layer 22, 22' from the surface in contact with the first catalyst layer 21, 21', and 70% or more exist in an area corresponding to the remaining half of the thickness. Such a configuration may be formed by controlling the amount of fiber-forming polymer spun, gradually from the beginning of spinning to the end of spinning, for example, by the spinning speed, when producing a frame with a three-dimensional web structure for the second catalyst layer, for example, by electrospinning.

The second catalyst layer 22, 22' may have a thickness ranging from 1 µm to 20 µm. If the thickness is less than 1 µm, the reaction area may be small and the activity may be reduced, and if the thickness is more than 20 µm, the movement distance of ions and electrons may increase, which may increase resistance, specifically, charge transfer resistance. The thickness of the second catalyst layer 22, 22' may be smaller, equal to, or larger than the thickness of the first catalyst layer 21, 21'. According to one embodiment of the present disclosure, the thickness of the second catalyst layer 22, 22' may be larger than the thickness of the first catalyst layer 21, 21', so that mass transfer resistance may be lowered.

Meanwhile, the membrane-electrode assembly for a fuel cell according to the present disclosure may be fabricated by a method for fabricating a membrane-electrode assembly, including steps of: (a) forming a first catalyst layer with low porosity on a substrate; (b) forming a second adhesive layer containing an ion-conducting polymer on the first catalyst layer with low porosity; (c) forming a first adhesive layer containing a plasticizer and a crosslinking agent on the second adhesive layer; (d) performing positioning such that the first adhesive layer faces one surface or both surfaces of a polymer electrolyte membrane, followed by bonding; (e) removing the substrate; and (f) forming a second catalyst layer with high porosity on the first catalyst layer with low porosity.

According to one embodiment of the present disclosure, in step (a), the first catalyst layer with low porosity may be formed by any method known in the art, such as bar coating, doctor blade coating, roll-to-roll printing, screen printing, etc., and preferably may be formed by bar coating. Specific fabrication conditions for forming the first catalyst layer may be appropriately selected by those skilled in the art.

According to one embodiment of the present disclosure, in step (b), the second adhesive layer may be formed by applying a solution prepared by mixing the ion-conducting polymer with a solvent. The solvent used may be selected from among water, a hydrophilic solvent, and a non-aqueous polar solvent. The hydrophilic solvent may be an alcohol solvent such as methanol, ethanol, isopropyl alcohol, n-propyl alcohol, butyl alcohol, etc., and the non-aqueous polar solvent may be selected from ethylene carbonate, propylene carbonate, butylene carbonate, dimethyl carbonate, tetrahydrofuran, 2-methyltetrahydrofuran, 1,3-dioxirane, 4,4-dimethyl-1,3-dioxirane, γ-butyrolactone, acetonitrile, etc.

The amount of the ion-conducting polymer contained in the solution may be 0.5 to 60 wt%, specifically 1 to 40 wt%, more specifically 1 to 30 wt%, based on the total weight of the ion-conducting polymer solution. If the amount of the ion-conducting polymer is excessively large, it may be difficult to control the thickness of the adhesive layer to be small and the cell performance may deteriorate. Thus, the amount of the ion-conducting polymer is preferably within the above range.

The application may be performed by any method known in the art, such as spray coating, inkjet printing, roll-to-roll printing, screen printing, etc., and preferably may be performed by spray coating. Specific fabrication conditions, such as spray atomization pressure, drying temperature, drying time, etc., may be appropriately selected by those skilled in the art.

According to one embodiment of the present disclosure, in step (c), the first adhesive layer may be formed by applying a solution prepared by mixing the plasticizer and the crosslinking agent with a solvent. The solvent used may be selected from among water, a hydrophilic solvent, and a non-aqueous polar solvent, and specific examples thereof include alcohols such as ethanol, isopropyl alcohol, n-propyl alcohol, butyl alcohol, and methanol, dimethylacetamide, dimethyl sulfoxide, N-methylpyrrolidone, tetrahydrofuran, and the like.

The total amount of the plasticizer and the crosslinking agent in the solution may be 0.5 to 60 wt%, specifically 1 to 40 wt%, more specifically 1 to 30 wt%, based on the total weight of the solution. If the total amount of the plasticizer and the crosslinking agent is excessively large, it may be difficult to control the thickness of the adhesive layer to be small and the mechanical properties may be deteriorated. Thus, it is preferable that the total amount of the plasticizer and the crosslinking agent be within the above range.

In addition, the plasticizer and the crosslinking agent may be mixed with each other at a weight ratio of 5:1 to 1:1, specifically a weight ratio of 4:1 to 2:1. By mixing the plasticizer and the crosslinking agent at a weight ratio within the above range, the adhesive may exhibit excellent adhesive performance and at the same time, the adhesive layer may be stabilized at room temperature so that the plasticizer does not cause problems such as a decrease in physical properties or layer shape instability.

The application may be performed by any method known in the art, such as spray coating, inkjet printing, roll-to-roll printing, screen printing, etc., and preferably may be performed by spray coating. Specific fabrication conditions, such as spray atomization pressure, drying temperature, drying time, etc., may be appropriately selected by those skilled in the art.

According to one embodiment of the present disclosure, the bonding in step (d) may be performed by roll pressing or hot pressing. In the case of roll pressing, the polymer electrolyte membrane and the electrode should be bonded together by applying high temperature and high pressure within a short period of time while they continuously move, and a relatively higher process temperature and pressure than those in flat plate pressing should be applied. In this case, the high temperature and pressure may cause changes in the pore structure of the electrode, deterioration of the polymer electrolyte membrane, and mechanical deformation. Therefore, it is important to perform transfer bonding at low temperature and pressure. According to the present disclosure, the roll pressing and hot pressing may be performed at lower temperature and pressure than those in conventional technology. For example, the roll pressing may be performed under a pressure of less than 4 MPa, a temperature lower than 140°C, and a moving speed of 0.1 to 3 m/min.

According to one embodiment of the present disclosure, in step (f), the second catalyst layer may be formed by spinning a spinning solution prepared by mixing a second catalyst, a second ion-conducting polymer, a fiber-forming polymer, and a solvent.

The spinning may be performed by any one method selected from among electrospinning, melt-blown spinning, flash spinning, and electrostatic melt-blown spinning. Preferably, it may be performed by electrospinning.

Electrospinning is a spinning method in which a positive (+) or negative (-) voltage is directly applied to a spinning nozzle to charge a solution, the charged solution is discharged through a spinning nozzle into an air layer, and then ultrafine fibers are produced through the stretching of charged filaments and branching of other filaments in the air layer. When the second catalyst layer with high porosity 22, 22' is formed by electrospinning, the spinning solution may be introduced into the barrel of the electrospinning device and then discharged through a spinning nozzle to which a high voltage is applied, and the spun fiber may be laminated on a substrate, for example, the first catalyst layer, and dried. Here, the voltage range, discharge rate, viscosity of the spinning solution, distance between the tip and the substrate, etc. may be appropriately adjusted by those skilled in the art. For example, a voltage of 7 to 30 kV may be applied, and the discharge rate of the solution may be 10 to 50 µL/min.

A fuel cell according to one embodiment of the present disclosure may be a fuel cell that includes the membrane-electrode assembly and uses, for example, hydrogen gas as fuel.

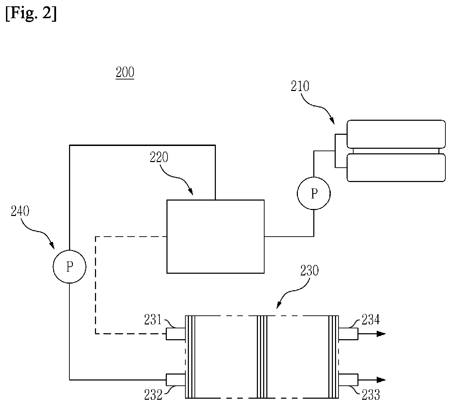

FIG. 2 is a schematic diagram illustrating the overall configuration of a fuel cell according to one embodiment of the present disclosure.

Referring to FIG. 2, a fuel cell 200 includes: a fuel supply unit 210 configured to supply a mixture of fuel and water; a reforming unit 220 configured to reform the mixture to generate a reformed gas containing hydrogen gas; a stack 230 configured to generate electrical energy by causing an electrochemical reaction between the reformed gas containing hydrogen gas supplied from the reforming unit 220 and an oxidizer; and an oxidizer supply unit 240 configured to supply an oxidizer to the reforming unit 220 and the stack 230.

The stack 230 has a plurality of unit cells that generate electrical energy by inducing an oxidation/reduction reaction between a reformed gas containing hydrogen gas supplied from the reforming unit 220 and an oxidizer supplied from the oxidizer supply unit 240.

Each unit cell means a unit cell that generates electricity, and includes: the membrane-electrode assembly that oxidizes/reduces the reformed gas containing hydrogen gas and the oxygen in the oxidizer; and separator plates (also called bipolar plates; hereinafter referred to as "separator plates") for supplying the reformed gas containing hydrogen gas and the oxidizer to the membrane-electrode assembly. The separator plates are positioned on both sides of the membrane-electrode assembly. At this time, the separator plates positioned at the outermost sides of the stack, respectively, are specifically referred to as end plates.

Among the separator plates, one end plate is provided with a first supply pipe 231 having pipe-type for introducing the reformed gas containing hydrogen gas supplied from the reforming unit 220, and a second supply pipe 232 for introducing oxygen gas, and the other end plate is provided with a first discharge pipe 233 for discharging the remaining unreacted reformed gas containing hydrogen gas from a plurality of unit cells to the outside, and a second discharge pipe 234 for discharging the remaining unreacted oxidizer from the unit cells to the outside.

### Mode for Invention

Hereinafter, specific examples of the present disclosure will be presented. However, the examples described below are only for illustrating or explaining the present disclosure in detail, and the present disclosure is not limited thereto. In addition, the technical contents not described herein are sufficiently derivable by those skilled in the art, and thus the description thereof is omitted.

### [Comparative Example 1]

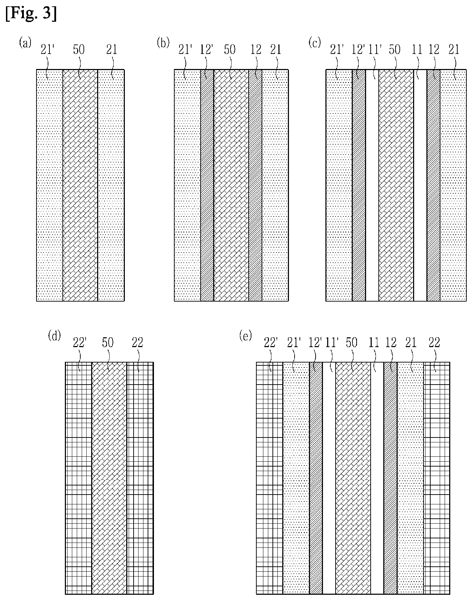

An electrode catalyst slurry was prepared by mixing a Pt/carbon catalyst and Nafion and applied onto a release film by bar coating. Thereafter, the slurry was dried in an oven at 60°C for 4 hours to form electrodes (catalyst layers with low-porosity) (anode: 0.1 mg_{Pt}/cm², and cathode: 0.4 mg_{Pt}/cm²). At this time, the pores formed in the electrodes had a mean pore size of 45 nm, the electrodes had a porosity of about 33%, the thickness of the anode was about 2 µm, and the thickness of the cathode was 10 µm. The electrodes were positioned on both sides of a hydrocarbon (sulfonated poly(arylene ether sulfone ketone) multiblock copolymer)-based electrolyte membrane and subjected to thermal bonding using a roll press at 180°C, 4 MPa, and a speed of 1 M/min to obtain a membrane-electrode assembly as shown in (a) of FIG. 3.

### [Comparative Example 2]

A 5 wt% Nafion dispersion was prepared. The electrodes (catalyst layers with low porosity) formed in Comparative Example 1 were placed on a 120°C heating plate, and the 5 wt% Nafion dispersion was spray-coated on the electrodes to form adhesive layers containing an ion-conducting polymer. Thermal bonding was performed using a roll press in the same manner as in Comparative Example 1 at 160°C, 3 MPa, and a speed of 1 M/min to obtain a membrane-electrode assembly as shown in (b) of FIG. 3.

### [Comparative Example 3]

To form first adhesive layers, a 10 wt% solution was prepared by mixing polyethylene glycol as a plasticizer and benzoquinone as a crosslinking agent at a weight ratio of 3:1, and spray-coated on the second adhesive layers containing the ion-conducting polymer, formed in Comparative Example 2, to form first adhesive layers containing the plasticizer and the crosslinking agent. At this time, the weight ratio of the second adhesive layer to the first adhesive layer was set to 1:0.5. The electrodes were used as cathodes, positioned on both sides of a hydrocarbon-based electrolyte membrane with an area of 25 cm², and subjected to thermal bonding using a roll press at 140°C, 3 MPa, and a speed of 1 M/min to obtain a membrane-electrode assembly as shown in (e) of FIG. 3.

### [Comparative Example 4]

An electrode slurry was prepared by mixing a Pt catalyst, Nafion as a binder, and PVA. The electrode slurry was electrospun onto a hydrocarbon (sulfonated poly(arylene ether sulfone ketone) multiblock copolymer)-based electrolyte membrane at 5 µL/min and 13 kV to form high-porosity web-like catalyst layers (0.4 mg_{Pt}/cm²) as electrodes, thereby obtaining a membrane-electrode assembly as shown in (d) of FIG. 3. At this time, the pores formed in the electrodes had a mean pore size of 1,200 nm, the electrodes had a porosity of about 68%, and the total thickness of the cathode catalyst layer (catalyst layer with high porosity) was about 20 µm.

### [Comparative Example 5]

To form first adhesive layers, a 5 wt% solution of benzoquinone, a crosslinking agent, was prepared and spray-coated on the second adhesive layers containing the ion-conducting polymer, formed in Comparative Example 2, to form first adhesive layers containing only the crosslinking agent. At this time, the weight ratio of the second adhesive layer to the first adhesive layer was set to 1:0.5. In addition, to form second catalyst layers, an electrode slurry was prepared by mixing a catalyst, Nafion as a binder, and PVA. The low-porosity catalyst layer of the cathode was applied at a density of 0.3 mg_{Pt}/cm² and bonded (porosity of the low-porosity catalyst layer: 33%, mean pore size: 45 nm). The electrode slurry was electrospun on the low-porosity catalyst layers of the fabricated membrane-electrode assembly at 5 µL/min and 13 kV to form high-porosity web-like catalyst layers, thereby obtaining a membrane-electrode assembly as shown in (e) of FIG. 3. At this time, the high-porosity web-like catalyst layers were formed to have 0.1 mg_{Pt}/cm² (porosity of the high-porosity catalyst layer: 68%, mean pore size: 1,200 nm). The total thickness of the cathode catalyst layer was about 13 µm. That is, the high-porosity catalyst layer with a thickness of about 5 µm was formed on the low-porosity catalyst layer with a thickness of about 8 µm.

### [Comparative Example 6]

To form first adhesive layers, a 5 wt% solution of polyethylene glycol as a plasticizer was prepared and spray-coated on the second adhesive layers containing the ion-conducting polymer, formed in Comparative Example 2, to form first adhesive layers containing only the plasticizer. At this time, the weight ratio of the second adhesive layer to the first adhesive layer was set to 1:0.5. The remaining first catalyst layers and second catalyst layers were formed as in Comparative Example 5.

### [Comparative Example 7]

To form first adhesive layers, polyethylene glycol as a plasticizer and benzoquinone as a crosslinking agent were mixed together at a weight ratio of 10:1, and the mixture was spray-coated on second adhesive layers to form first adhesive layers containing the plasticizer and the crosslinking agent. At this time, the weight ratio of the second adhesive layer to the first adhesive layer was set to 1:0.5. The remaining catalyst layers were configured in the same manner as in Comparative Example 5.

### [Comparative Example 8]

To form first adhesive layers, polyethylene glycol as a plasticizer and benzoquinone as a crosslinking agent were mixed together at a weight ratio of 1:10, and the mixture was spray-coated on second adhesive layers to form first adhesive layers containing the plasticizer and the crosslinking agent. At this time, the weight ratio of the second adhesive layer to the first adhesive layer was set to 1:0.5. The remaining catalyst layers were configured in the same manner as in Comparative Example 5.

### [Example 1]

To form first adhesive layers, polyethylene glycol as a plasticizer and benzoquinone as a crosslinking agent were mixed together at a weight ratio of 3:1, and the mixture was spray-applied to second adhesive layers to form first adhesive layers containing the plasticizer and the crosslinking agent. At this time, the weight ratio of the second adhesive layer to the first adhesive layer was set to 1:0.5. The remaining catalyst layers were configured in the same manner as in Comparative Example 5.

### [Example 2]

In the same configuration as Example 1, low-porosity catalyst layers were formed to have 0.2 mg_{Pt}/cm² and high-porosity web-like catalyst layer were formed to have 0.2 mg_{Pt}/cm². The total thickness of the cathode catalyst layer was about 15 µm. That is, the high-porosity catalyst layer with a thickness of 10 µm (porosity of the high-porosity catalyst layer: 68%, mean pore size: 1,200 nm) was formed on the low-porosity catalyst layer with a thickness of about 5 µm (porosity of the low-porosity catalyst layer: 33%, mean pore size: 45 nm).

### [Experimental Example 1] Adhesion Strength between Polymer Electrolyte Membrane and Electrode

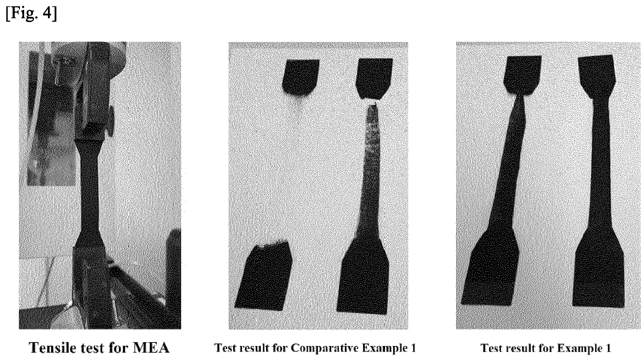

A tensile test was performed to test the adhesion strength between the polymer electrolyte membrane and the electrode, and the results are shown in FIG. 4. It can be confirmed that, when the membrane-electrode assembly fabricated is pulled with a constant force from both sides using a universal tester, the polymer electrolyte membrane and the electrode are easily separated from each other if the adhesion strength therebetween is poor. In the case of the MEA of Comparative Example 1, it can be seen that the electrode and the electrolyte membrane were easily separated from each other during the tensile test even though they were bonded to each other at a very high temperature. On the other hand, in the case of Example 1 including both the first adhesive layer and the second adhesive layer, transfer was possible at a relatively lower temperature and pressure than those in a conventional method, and the adhesion strength was excellent.

As a result of applying the crosslinking agent and the plasticizer to the first adhesive layer at varying weight ratios, it was confirmed that, when the adhesive layer was formed only of the plasticizer, the ductility of the polymer was more easily imparted, so that the electrolyte membrane and the electrode could be bonded to each other at a very low temperature and pressure, but the membrane and the electrode were easily separated from each other in the tensile test. The crosslinking agent functions to increase the adhesion strength between the membrane and the electrode, and the plasticizer functions to make the MEA under lower process conditions (temperature and pressure). The above tendency depends on the ratio of the crosslinking agent to the plasticizer, and as shown in Table 1 below, when the weight ratio of the plasticizer to the crosslinking agent in the first adhesive layer is between 5:1 and 1:1, there are the advantages of easy fabrication conditions and the excellent adhesion strength between the membrane and the electrode.

**[Table 1]**

| | Configuration | Membrane-electrode bonding temperature [°C] | Membrane-electrode bonding pressure [MPa] | Tensile test (electrode detachmen t) |
|---|---|---|---|---|
| Comparative Example 1 | First catalyst layer-electrolyte membrane | 180 | 4 | Fail |
| Comparative Example 2 | First catalyst layer-second adhesive layer-electrolyte membrane | 160 | 3 | Pass |
| Comparative Example 3 | First catalyst layer-second adhesive layer-first adhesive layer (plasticizer:crosslinking agent =3:1)-electrolyte membrane | 140 | 3 | Pass |
| Comparative Example 5 | Second catalyst layer-first catalyst layer-second adhesive layer-first adhesive layer (100% crosslinking agent)-electrolyte membrane | 160 | 3 | Pass |
| Comparative Example 6 | Second catalyst layer-first catalyst layer-second adhesive layer-first adhesive layer (100% plasticizer)-electrolyte membrane | 120 | 2 | Fail |
| Comparative Example 7 | Second catalyst layer-first catalyst layer-second adhesive layer-first adhesive layer (plasticizer:crosslinking agent =10:1)-electrolyte membrane | 120 | 2 | Fail |
| Comparative Example 8 | Second catalyst layer-first catalyst layer-second adhesive layer-first adhesive layer (plasticizer:crosslinking agent = 1: 10)-electrolyte membrane | 160 | 3 | Pass |
| Example 1 | Second catalyst layer-first catalyst layer-second adhesive layer-first adhesive layer (plasticizer:crosslinking agent =3:1)-electrolyte membrane | 140 | 2 | Pass |

### [Experimental Example 2] Evaluation of Performance of Membrane-Electrode Assemblies

Unit cells were fabricated using the membrane-electrode assemblies of the Comparative Examples and the Example and the output performance thereof was evaluated. The cell temperature of the unit cell was maintained at 65°C, and hydrogen and air with a relative humidity of 100% were supplied to the anode and the cathode, respectively, in amounts corresponding to stoichiometry 1.5/2.0. Table 2 shows the voltage measured when a current density of 2.2 A/cm² was applied. The higher the voltage measured, the lower the mass transfer resistance. It can be confirmed that Example 1, to which the high-porosity catalyst layer was applied, had lower mass transfer resistance than other structures.

**[Table 2]**

| | Configuration | Voltage [V] (@ 2.2 A/cm²) | Voltage change [mV] compared to Comparativ e Example 1 | Mass transfer resistance (Ω • cm²) |
|---|---|---|---|---|
| Comparative Example 1 | First catalyst layer-electrolyte membrane | 0.404 | - | 0.197 |
| Comparative Example 2 | First catalyst layer-second adhesive layer-electrolyte membrane | 0.421 | +17 | 0.164 |
| Comparative Example 3 | First catalyst layer-second adhesive layer-first adhesive layer-electrolyte membrane | 0.428 | +24 | 0.156 |
| Comparative Example 4 | Second catalyst layer-electrolyte membrane | 0.436 | +32 | 0.143 |
| Comparative Example 5 | Second catalyst layer-first catalyst layer-second adhesive layer-first adhesive layer (containing only crosslinking agent)-electrolyte membrane | 0.453 | +49 | 0.130 |
| Comparative Example 6 | Second catalyst layer-first catalyst layer-second adhesive layer-first adhesive layer (containing only plasticizer)-electrolyte membrane | 0.448 | +44 | 0.141 |
| Example 1 | Second catalyst layer-first catalyst layer-second adhesive layer-first adhesive layer-electrolyte membrane | 0.488 | +84 | 0.109 |
| Example 2 | Second catalyst layer-first catalyst layer-second adhesive layer-first adhesive layer-electrolyte membrane | 0.497 | +93 | 0.101 |

Table 3 shows the voltage and charge transfer resistance measured when a current density of 1.0 A/cm² was applied.

It was confirmed that, in the case of Comparative Example 4, in which the electrode was formed only of the high-porosity catalyst layer, the thickness increased, so that the transfer distance of hydrogen ions to the reaction point on the catalyst surface increased, thereby increasing the charge transfer resistance, but the charge transfer resistance decreased at the medium current or less when the catalyst layer partially included the low porosity web.

From Table 2 above and Table 3 below, it can be seen that the Examples according to the present disclosure exhibit effects in both medium current (Table 3) and high current (Table 2) ranges.

**[Table 3]**

| | Configuration | Voltage [V] (@ 1.0 A/cm²) | Voltage change [mV] compared to Comparative Example 1 | Charge transfer resistance (Ω • cm²) |
|---|---|---|---|---|
| Comparative Example 1 (Ref.) | First catalyst layer-electrolyte membrane | 0.610 | - | 0.142 |
| Comparative Example 2 | First catalyst layer-second adhesive layer-electrolyte membrane | 0.625 | +15 | 0.135 |
| Comparative Example 3 | First catalyst layer-second adhesive layer-first adhesive layer-electrolyte membrane | 0.638 | +28 | 0.121 |
| Comparative Example 4 | Second catalyst layer-electrolyte membrane | 0.603 | -7 | 0.154 |
| Comparative Example 5 | Second catalyst layer-first catalyst layer-second adhesive layer-first adhesive layer (containing only crosslinking agent)-electrolyte membrane | 0.644 | +34 | 0.119 |
| Comparative Example 6 | Second catalyst layer-first catalyst layer-second adhesive layer-first adhesive layer (containing only plasticizer)-electrolyte membrane | 0.650 | +40 | 0.111 |
| Example 1 | Second catalyst layer-first catalyst layer-second adhesive layer-first adhesive layer-electrolyte membrane | 0.668 | +58 | 0.101 |
| Example 2 | Second catalyst layer-first catalyst layer-second adhesive layer-first adhesive layer-electrolyte membrane | 0.661 | +51 | 0.109 |

Although the preferred embodiments of the present disclosure have been described in detail above, the above-described embodiments are presented as specific examples of the present disclosure, and the present disclosure is not limited thereto. Various modifications and improvements made by those skilled in the art using the basic concept of the present disclosure as defined in the following claims also fall within the scope of the present disclosure.

**[Description of Reference Numerals]**

| | | | |
|---|---|---|---|
| 100: | membrane-electrode assembly | | |
| 10, 10': | adhesive layer | | |
| 11, 11': | first adhesive layer | 12, 12': | second adhesive layer |
| 20, | 20': catalyst layer | | |
| 21, 21': | first catalyst layer | 22, 22': | second catalyst layer |
| 50: | polymer electrolyte membrane | | |
| 200: | fuel cell | | |
| 210: | fuel supply unit | 220: | reforming unit |
| 230: | stack | 231: | first supply pipe |
| 232: | second supply pipe | 233: | first discharge pipe |
| 234: | second discharge pipe | 240: | oxidizer supply unit |

## Claims

1. A membrane-electrode assembly for a fuel cell comprising:
a polymer electrolyte membrane;
a first adhesive layer on the polymer electrolyte membrane;
a second adhesive layer on the first adhesive layer;
a first catalyst layer with low porosity on the second adhesive layer; and
a second catalyst layer with high porosity on the first catalyst layer with low porosity,
wherein the first adhesive layer contains a plasticizer and a crosslinking agent, and the second adhesive layer contains an ion-conducting polymer.

2. The membrane-electrode assembly of claim 1, wherein the plasticizer is at least one selected from the group consisting of (poly)alkylene glycol, dihydroxybenzene, (poly)alkylene glycol dialkyl ether, benzoquinones, dialkylene phthalate, and copolymers thereof.

3. The membrane-electrode assembly of claim 2, wherein the plasticizer is at least one selected from polyethylene glycol, polypropylene glycol, ethylene glycol, propylene glycol, tetraethylene glycol, dihydroxybenzene, polyethylene glycol dimethyl ether, polyethylene glycol diethyl ether, polyethylene glycol dipropyl ether, polyethylene glycol dibutyl ether, polypropylene glycol dimethyl ether, polypropylene glycol diethyl ether, benzoquinone, dimethyl phthalate, diethyl phthalate, dibutyl phthalate, dioctyl phthalate, and copolymers thereof.

4. The membrane-electrode assembly of claim 1, wherein the crosslinking agent has a functional group capable of forming a hydrogen bond with the ion-conducting polymer.

5. The membrane-electrode assembly of claim 4, wherein the crosslinking agent has at least one functional group selected from the group consisting of a carbonyl group (-CO-), a hydroxyl group (-OH), a carboxyl group (-COOH), a nitro group (-NO₂), and an amine group (-NR¹R²), wherein R¹ and R² are each independently H, a substituted or unsubstituted alkyl group having 1 to 6 carbon atoms, or a substituted or unsubstituted aryl group having 6 to 12 carbon atoms, or are bonded to each other to form a heterocycle having 2 to 5 carbon atoms.

6. The membrane-electrode assembly of claim 5, wherein the crosslinking agent is a substituted or unsubstituted benzoquinone, a substituted or unsubstituted naphthoquinone, a substituted or unsubstituted dihydroxybenzene, a substituted or unsubstituted benzenedicarboxylic acid, a substituted or unsubstituted aminophenol, a substituted or unsubstituted phenylenediamine, a substituted or unsubstituted bipyridine diamine, a substituted or unsubstituted di(aminophenyl)amine, a substituted or unsubstituted bipyrrole, or a mixture of two or more thereof.

7. The membrane-electrode assembly of claim 1, wherein a weight ratio between the plasticizer and the crosslinking agent is 5:1 to 1:1.

8. The membrane-electrode assembly of claim 1, wherein the ion-conducting polymer is a proton-conducting conductor having at least one proton exchange group selected from the group consisting of a sulfonic acid group, a carboxyl group, a boronic acid group, a phosphoric acid group, an imide group, a sulfonimide group, a sulfonamide group, a sulfonic acid fluoride group, and combinations thereof.

9. The membrane-electrode assembly of claim 8, wherein the ion-conducting polymer is a fluorine-based proton-conducting conductor having a sulfonic acid group and/or a carboxyl group, a hydrocarbon-based proton-conducting conductor having a sulfonic acid group and/or a carboxyl group, or a mixture thereof.

10. The membrane-electrode assembly of claim 1, wherein the first catalyst layer and the second catalyst layer each independently contain a first ion-conducting polymer and a second ion-conducting polymer, and the ion-conducting polymer of the second adhesive layer is the same as at least one of the first ion-conducting polymer and the second ion-conducting polymer.

11. The membrane-electrode assembly of claim 1, wherein the first adhesive layer and the second adhesive layer each independently have a thickness of 0.01 to 5 µm.

12. The membrane-electrode assembly of claim 1, wherein the second catalyst layer with high porosity has a three-dimensional web structure.

13. The membrane-electrode assembly of claim 1, wherein the second catalyst layer with high porosity contains at least one fiber-forming polymer selected from the group consisting of polyether urethane, polyvinyl acetate (PVAc), a polyvinyl acetate copolymer, polyvinyl alcohol (PVA), polyfurfuryl alcohol (PPFA), polyurethane, a polyurethane copolymer such as polyether urethane, cellulose acetate, cellulose acetate butyrate, cellulose acetate propionate, polymethyl methacrylate (PMMA), polymethyl acrylate (PMA), a polyacrylic copolymer, polystyrene, a polystyrene copolymer, polyethylene, polyethylene glycol, polyethylene oxide (PEO), polypropylene oxide (PPO), a polyethylene oxide copolymer, a polypropylene oxide copolymer, polycarbonate (PC), polyvinyl acetal, polyvinyl chloride (PVC), polycaprolactone, polyvinylpyrrolidone (PVP), polyvinyl fluoride, a polyvinylidene fluoride copolymer, and polyamide.

14. The membrane-electrode assembly of claim 1, wherein the first catalyst layer with low porosity has a porosity of 1 to 50% and a pore size of 10 to 500 nm, and the second catalyst layer with high porosity has a porosity of 50 to 90% and a pore size of 500 to 5,000 nm.

15. The membrane-electrode assembly of claim 1, wherein the first catalyst layer with low porosity has a thickness of 1 µm to 10 µm, and the second catalyst layer with high porosity has a thickness of 1 µm to 20 µm.

16. A method for fabricating a membrane-electrode assembly for a fuel cell, comprising steps of:
(a) forming a first catalyst layer with low porosity on a substrate;
(b) forming a second adhesive layer containing an ion-conducting polymer on the first catalyst layer with low porosity;
(c) forming a first adhesive layer containing a plasticizer and a crosslinking agent on the second adhesive layer;
(d) performing positioning such that the first adhesive layer faces one surface or both surfaces of a polymer electrolyte membrane, followed by bonding;
(e) removing the substrate; and
(f) forming a second catalyst layer with high porosity on the first catalyst layer with low porosity.

17. The method of claim 16, wherein the second adhesive layer in step (b) is formed by applying a solution containing the ion-conducting polymer, wherein the ion-conducting polymer in the solution is contained in an amount of 0.5 to 60 wt% based on the total weight of the solution.

18. The method of claim 16, wherein the first adhesive layer in step (c) is formed by applying a solution containing the plasticizer and the crosslinking agent, and the total amount of the plasticizer and the crosslinking agent in the solution is 0.5 to 60 wt% based on the total weight of the solution.

19. The method of claim 16, wherein the second catalyst layer with high porosity in step (f) is formed by spinning a spinning solution prepared by mixing a catalyst, an ion-conducting polymer, a fiber-forming polymer, and a solvent.

20. A fuel cell comprising the membrane-electrode assembly set forth in claim 1.
